# EUROPÄISCHE PATENTANMELDUNG

(11) **EP 4 782 523 A1**
(43) Veröffentlichungstag der Anmeldung: **29.07.2026**
(21) Anmeldenummer: 25154371.6
(22) Anmeldetag: 28.01.2025
(51) Int. Cl.: C10M 101/00

(54) **KOLBENBREMSE, VORZUGSWEISE LINEARKOLBEN- ODER ROTATIONSKOLBENBREMSE**

(71) Anmelder: Druck- und Spritzgußwerk Hettich GmbH & Co. KG, 35066 Frankenberg (DE)
(72) Erfinder: TEPEL, Dominik, 59964 Medebach-Dreislar (DE); STEMMER, Priska, 35088 Battenberg/Eder (DE); AIT EL MALLALI, Hichame, 52351 Düren (DE); KANTH KOSURU, Chandra, 52146 Würselen (DE); LUCKA, Klaus, 52072 Aachen (DE)
(74) Vertreter: Dantz, Jan Henning

(57) **Zusammenfassung**

Eine Kolbenbremse (1) umfassend einen beweglich-gelagerten Kolben (2) und ein Gehäuse (4), wobei in dem Gehäuse (3) ein Dämpfungsfluid (7) an-geordnet ist und wobei die Bewegung des Kolbens (2) durch das Dämpfungsfluid (7) gebremst wird, wobei die Kolbenbremse (1) ausgelegt ist zum Abbremsen einer maximalen Kolbengeschwindigkeit zwischen 10-800 m/s um zumindest 80%, wobei das Dämpfungsfluid (7) zumindest zu 75 Gew.% eine Trägerflüssigkeit umfasst, welche als eine siliziumfreie Kohlenwasserstoffverbindung oder als ein Gemisch aus mehreren siliziumfreien Kohlenwasserstoffverbindungen ausgebildet ist; sowie eine Verwendung der erfindungsgemäßen Kolbenbremse.

## Beschreibung

Die vorliegende Erfindung betrifft eine Kolbenbremse. Dabei kann es sich um eine Linearkolbenbremse oder um eine Rotationskolbenbremse handeln.

Entsprechende Kolbenbremsen sind an sich bekannt. Sie bremsen ein auf den Kolben mit einer Auftreffgeschwindigkeit x einwirkendes Bauelement ab, so dass es zu einer Dämpfung der Vorwärtsbewegung kommt. Die Kolbenbremse kann daher auch als Dämpfer bezeichnet werden.

Die Dämpfung kann auf unterschiedliche Art und Weise erfolgen. Eine Möglichkeit ist ein mechanisches Abbremsen durch Kompression einer Druckfeder unter Aufbau von Rückstellkräften, z.B. einer Spiralfeder oder einer Gasdruckfeder. Eine andere Methode ist ein Abbremsen durch Verdrängung eines Dämpfungsfluids, insbesondere eines Dämpfungsöls.

Damit eine effektive Dämpfung erfolgen kann, also dass es weder zu einer zu schnellen Verdrängung noch zu einer Verstopfung der Fluidkanäle kommt, muss unter anderem die Viskosität und das Viskositäts-Temperatur-Verhalten bei der Auswahl eines geeigneten Dämpfungsfluids berücksichtigt werden. Druckfedern unterliegen solchen Randbedingungen nicht bzw. hat bei ihnen ein Temperaturwechsel nur geringen Einfluss.

Kolbenbremsen sind für bestimmte Baugrößen ausgelegt. Im vorliegenden Fall geht es um die Dämpfung der Auftreffgeschwindigkeit eines Kolbens bei 10-800 mm/s, vorzugsweise bei einer Wirkfläche des Kolbens auf das abbremsende Medium von weniger als 2 cm², besonders bevorzugt zwischen 0,1 cm² und 1 cm².

Im Anwendungsbereich der vorgenannten Kennzahlen sind Kolbenbremsen, z.B. Möbelbremse bekannt, wie sie u.a. in der DE 20 2006 003 197 U1 beschrieben sind. In diesem Anwendungsbereich der kleinen Kolbenbremsen mit entsprechenden Fluidleitsystemen mit geringen Kanal-Querschnitten werden derzeit ausschließlich Dämpfungsfluide in Form von Silikonölen genutzt. Dies kann zurückgeführt werden auf ein besonders gutes Viskositäts-Temperatur-Verhältnis. Im vorgenannten Anwendungsbereich sind möglichst geringe Viskositätsänderungen über einen größeren Temperaturbereich erwünscht. Beispielsweise sollten Kolbenbremsen auf Transporttemperaturen zwischen -25°C bis +70°C ausgelegt sein. Überdies sollten Kolbenbremsen auf Temperaturen zumindest im Arbeitsbereich zwischen 5 °C bis 40°C ausgelegt sein. Unter Berücksichtigung des Strömungsverhaltens von Ölen wird von keinem anderen Öl die bevorzugten Viskositäts-Temperatur-Eigenschaften wie beim Silikonöl erreicht. Somit besteht derzeit im Anwendungsbereich das technische Vorurteil, dass lediglich Silikonöl für den vorgenannten Anwendungsbereich bei entsprechend miniaturisierten Fluidleitsystemen als Dämpfungsfluid geeignet ist.

Ausgehend von diesen Vorüberlegungen ist es die Aufgabe der vorliegenden Erfindung eine gattungsgemäße Kolbenbremse mit besserer Umweltverträglichkeit bereitzustellen.

Die vorliegende Erfindung löst diese Aufgabe durch das Bereitstellen einer Kolbenbremse mit den Merkmalen des Anspruchs 1.

Eine erfindungsgemäße Kolbenbremse umfasst in an sich bekannter Art und Weise einen beweglich-gelagerten Kolben und ein Gehäuse, wobei in dem Gehäuse ein Dämpfungsfluid angeordnet ist. Die Kolbenbremse ist derart ausgebildet, dass die Bewegung des Kolbens durch das Dämpfungsfluid gebremst wird. Dies kann mittelbar durch Abbremsen von mit dem Kolben zusammenwirkenden Bauteilen oder unmittelbar durch direktes Abbremsen des Kolbens erfolgen. Dabei ist die Kolbenbremse ausgelegt zum Abbremsen einer maximalen Kolbengeschwindigkeit zwischen 10-800 mm/s um zumindest 80% dieser Kolbengeschwindigkeit. Die maximale Kolbengeschwindigkeit übersteigt im Dauereinsatz die Geschwindigkeit von 800 m/s nicht, kann aber in Überlastsituationen bis zu 2 m/s erreichen. Entsprechend sind die Kolbengröße und die Dimension des Gehäuses ausgelegt.

Erfindungsgemäß umfasst das Dämpfungsfluid zumindest zu 75 Gew.% eine Trägerflüssigkeit, welche als eine siliziumfreie Kohlenwasserstoffverbindung oder als ein Gemisch aus mehreren siliziumfreien Kohlenwasserstoffverbindungen ausgebildet ist.

Die Verwendung von siliziumfreien Kohlenwasserstoffverbindungen als Hauptkomponente erlaubt eine deutliche Senkung der Ökobilanz der erfindungsgemäßen Kolbenbremse. Dabei hat sich überraschend gezeigt, dass es zur Abbremsung beweglicher Bauteile und für eine entsprechende Übertragung der maximalen Kolbengeschwindigkeit auf den Kolben keines Silikonöls bedarf, sondern auch alternative Fluide in Form von siliziumfreien Kohlenwasserstoffverbindungen zur Dämpfung einer Kolbenbewegung unter den vorgenannten Kolbengeschwindigkeiten möglich sind.

Vorteilhafte Ausgestaltungen der Erfindung sind Gegenstand der Unteransprüche.

Zur weiteren Umschreibung des Anwendungsbereichs der Kolbenbremse ist es von Vorteil, wenn insbesondere das Gehäuse und das darin angeordnete Dämpfungsfluid ausgebildet sind für einen maximalen Arbeitsdruck von zumindest 125 bar, vorzugsweise bis 500 bar.

Der Kolben kann überdies eine Anschlagsfläche von weniger als 2 cm² aufweisen.

Die siliziumfreie Kohlenwasserstoffverbindung oder alle im Gemisch enthaltenen siliziumfreien Kohlenwasserstoffverbindungen können als Flüssigkeiten oder als fließfähige Massen und vorzugsweise als ein Öl oder ein Schmierstoff ausgebildet sein.

Weiterhin ist es ökologisch von besonderem Vorteil, wenn die siliziumfreie Kohlenwasserstoffverbindung oder alle im Gemisch enthaltenen siliziumfreien Kohlenwasserstoffverbindungen als ein Pflanzenöl ausgebildet ist/sind.

Alternativ ist es von Vorteil, wenn als weniger ökologische Variante, allerdings als Variante mit breiterem Einsatzgebiet, die siliziumfreie Kohlenwasserstoffverbindung oder alle im Gemisch enthaltenen siliziumfreien Kohlenwasserstoffverbindungen als ein Weißöl, vorzugsweise als ein medizinisches Weißöl, besonders bevorzugt als Reaktionsprodukt einer Fischer-Tropsch-Synthese, ausgebildet sind. Das medizinische Weißöl ist insbesondere ein biobasiertes Paraffinöl. Besonders bevorzugt weisen medizinische Weißöle dabei die gleichen Eigenschaften zu technischen Weißölen auf

Eine weitere Alternative welche einen guten Kompromiss darstellt ist die Verwendung eines Polyolefins als die besagte Kohlenwasserstoffverbindung, welche vorzugsweise als ein Polyalphaolefin ausgebildet ist.

Für eine gute Materialverfügbarkeit für einen Kohlenwasserstoff mit verbesserte Ökobilanz bietet sich ein Polyalkylglycol, ein Polyethylenglykol oder ein Gemisch aus beiden als weitere Alternative an.

Eine natürliche Basis bilden siliziumfreie Kohlenwasserstoffverbindungen welche als eine Fettsäure ausgebildet sind. Gleiches gilt für die Klasse der Fettsäureester, die vorzugsweise als eines oder mehrere natürlich vorkommende Triglyceride, ausgebildet sind.

Weiterhin vorn Vorteil für die breite Einsatzfähigkeit im bevorzugten Einsatzbereich ist es, wenn die dynamische Viskosität des Trägerfluids, und besonders bevorzugt der Trägerflüssigkeit, mehr als 200 mPas bei 25°C, vorzugsweise zwischen 220-2500 mPas bei 25°C und besonders bevorzugt zwischen 300 - 2400 mPas bei 25°C beträgt. Die dynamische Viskosität kann gemäß der DIN EN 53019 mit der Messgeometrie eines koaxialen Zylinders oder einer Kegel-Platten-Geometrieermittelt werden

Ein Maß für die bessere Ökobilanz des Dämpfungsfluids ist z.B. die Product Carbon Footprint (kurz PCF)-Bilanz. Hierbei kann das Trägerfluid eine geringere PCF-Bilanz als ein Silikonöl bzw. jedes bekannte Silikonöl aufweisen und besonders bevorzugt eine um zumindest 50% geringere PCF-Bilanz als jedes bekannten Silikonöl aufweisen.

Überdies kann das Dämpfungsfluid, insbesondere der bevorzugten Ausgestaltung als Pflanzenöl, zumindest 5%, vorzugsweise zumindest 10% der Oxidationsbeständigkeit eines Silikonöls aufweisen. Die Oxidationsbeständigkeit der besagten Fluide kann beispielsweise gemäß der DIN EN 16091 bestimmt werden.

Dabei kann das Dämpfungsfluid vorteilhaft als ein H1-FDA-konformes Medium oder nach ISO 21469 zertifiziertes Medium ausgebildet sein.

Weiterhin kann das Dämpfungsfluid optional zu einem Gesamtumfang von weniger als 25 Gew.%, vorzugsweise weniger als 10 Gew.%, Additive aufweisen. Damit können Werte wie die dynamische Viskosität und die Oxidationsbeständigkeit oder die Temperaturbeständigkeit noch weiter angepasst werden

Die Additive können zumindest einen oder mehreren der folgenden Verbindungen aufweist oder sie können als eine oder mehrere der folgenden Verbindungen ausgebildet sein: Antioxidans, insbesondere ein primäres Antioxidans, Viskositätsindex-Verbesserer, Pigment, Fest-schmierstoff und/oder ein Stoff zur Verbesserung der Wärmeleitfähigkeit.

Als ein geeignetes Antioxidans kann in Abhängigkeit vom verwendeten Öl beispielsweise 2,6-di-tert-butyl-p-cresol, Dioctylphosphonat, Benzolamin, N-Phenyl-Reaktionsprodukte mit 2,4,4 Trimethylpenten als Einzelkomponenten oder als Gemisch aus mehreren oder allen der vorgenannten Verbindung verwandt werden.

Als ein geeigneter Viskositätsindex-Verbesserer kann in Abhängigkeit vom verwendeten Öl beispielsweise ein Petroleumkohlenwasserstoff genutzt werden

Alternativ oder zusätzlich kann auch ein Alkylester zur Verbesserung bzw. Einstellung und/oder Modifikation des Viskositätsindex genutzt werden.

Zusätzliche optionale Additive zur Einstellung vorbestimmter Eigenschaften sind insbesondere auch Schaumverbesserer und/oder Säurefänger.

Es ist überdies von Vorteil, wenn das Gehäuse einen ersten und einen zweiten Gehäuseraum aufweist, welche durch den beweglichen Kolben voneinander getrennt sind, wobei zumindest einer der Gehäuseräume mit dem Dämpfungsfluid befüllt ist und wobei die beiden Gehäuseräume mit einem Fluidleitsystem zum Überleiten des Dämpfungsfluids vom ersten in den zweiten Gehäuseraum miteinander verbunden sind. Dabei ist die Größe der beiden Gehäuseräume durch Verschieben des Kolbens einstellbar. Das Fluidleitsystem kann z.B. ein Strömungskanal, Drosselkanal oder eine Durchtrittsöffnung sein.

Weiterhin erfindungsgemäß ist die Verwendung einer erfindungsgemäßen Kolbenbremse als Möbelanschlagsdämpfer und/oder als ein Anschlagsdämpfer für die weiße Ware, insbesondere für Türen und/oder Schubkästen.

Die vorliegende Erfindung wird in der Folge anhand mehrerer Ausführungsvarianten unter Zuhilfenahme der beiliegenden Figuren näher erläutert. Es zeigen:
- Fig. 1: Prinzipskizze einer erfindungsgemäßen Kolbenbremse;
- Fig. 2: Vergleichsberechnung zum Kohlendioxid-Fußabdruck von verschiedenen Dämpfungsfluiden;
- Fig. 3: Vergleichsuntersuchungen zur Oxidationsstabilität der Dämpfungsfluide der Fig. 2; und
- Fig. 4: Vergleichsuntersuchung des Viskositäts-Temperatur-Verhaltens der Dämpfungsfluide der Fig. 2 und 3.

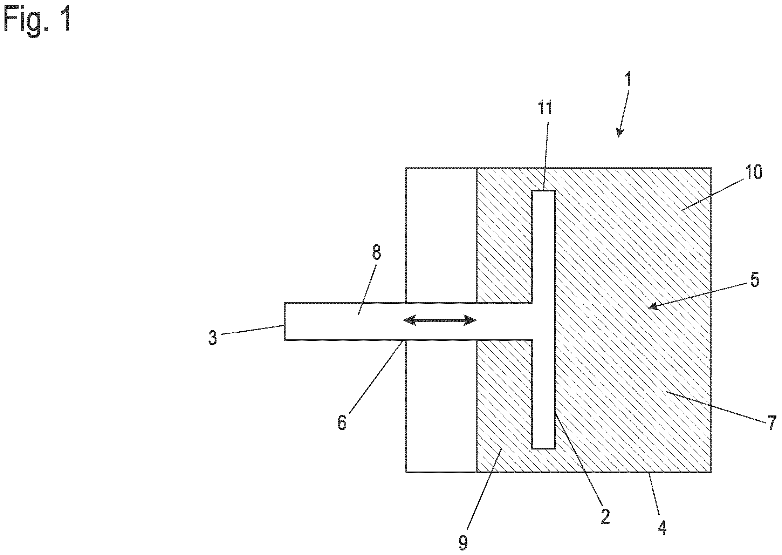

Fig. 1 zeigt das Grundprinzip einer erfindungsgemäßen Kolbenbremse 1 mit einem Kolben 2 in Form eines Linearkolbens. Auch Rotationskolben sind nach analogem Grundprinzip realisierbar.

Abgesehen vom Grundprinzip kann die dargestellte Kolbenbremse in vielfältiger Art und Weise konstruktiv abgewandelt werden. In der erfindungsgemäß bevorzugten Anwendung als Möbelbremse bzw. als Möbeldämpfer kann eine Fluidleitung durch einen Ringspalt, durch ein Drosselkanalsystem oder durch eine andere Form eines Fluidkanalsystems realisiert werden.

Am Kolben 2 schließt sich zur Führung und Krafteinleitung eine Kolbenstange 8 an, die eine endständige Stirnfläche aufweist, welche nachfolgend auch als Anschlagsfläche 3 benannt wird. Gegen diese Fläche schlägt ein bewegtes Element, z.B. ein Möbelbeschlagsteil oder Möbelteil, wie ein Schubkasten eines Möbels, eine Tür z.B. eine Kühlschranktür oder eine Möbeltür, oder dergleichen mittelbar oder unmittelbar an. Das bewegte Element hat typischerweise ein Gewicht von weniger als 20 - 40 kg, jedoch sind im Schwerlastbereich 60-80kg und bei Schiebetüren auch Gewichte von bis 160kg üblich. Die maximale zu dämpfende Auftreffgeschwindigkeit des bewegten Elements, welche an den Kolben 2 übergeben wird, liegt im vorgenannten Anwendungsbereich typischerweise zwischen 10-800 mm/s.

Die Anschlagfläche 3 der Kolbenstange 8 zu einem auftreffenden bewegten Element beträgt vorzugsweise weniger als 0,1 cm², besonders bevorzugt zwischen 0,02 cm² und 0,06 cm².

Die gegenüber dem Fluid wirksame Fläche wird hingegen durch die Kolbenfläche auf der Ober- und Unterseite definiert und beträgt vorzugsweise weniger als 2 cm², besonders bevorzugt zwischen 0,1 cm² und 1 cm².

Der maximale Druck, welcher beim Auftreffen des bewegten Elements auf den Kolben einwirken kann und durch die Kolbenbremse abgebaut wird, kann bevorzugt zwischen 25 bis 125 bar betragen. Entsprechend ist die Kolbenbremse zur Aufnahme und zum Abbau von Drücken in diesem Bereich ausgelegt.

Die Kolbenstange 8 erstreckt sich dabei ausgehend von der Anschlagsfläche 3 bis zum Kolben 2 in einen Gehäuseraum 5 eines Gehäuses 4 der Kolbenbremse. Das Gehäuse 4 weist eine abgedichtete Durchtrittsöffnung 6 auf, in welcher die Kolbenstange 8 bereichsweise angeordnet ist.

In dem Gehäuseraum 5 ist ein Dämpfungsfluid 7 angeordnet. Die Kolbenstange 8 mündet in den Kolben 2, welcher linear verschieblich in dem Gehäuseraum 5 angeordnet ist. Dadurch wird der Gehäuseraum 5 in einen ersten Teilraum 9 und einen zweiten Teilraum 10 unterteilt. Der Kolben 2 kann einzeln oder in Kombination mit dem Gehäuse 4 ein Fluidleitsystem 11 aufweisen. Dies können z.B. Fluidkanäle oder Öffnungen im Kolben 2 sein oder auch ein Ringspalt zwischen dem Kolben 2 und der Innenwandungsfläche des Gehäuses 4. Insgesamt kann das Fluid durch das Fluidleitsystem 11 durch entsprechenden Druck oder Zug auf den Kolben 2 von dem ersten sich verkleinernden Teilraum 9 in den zweiten sich vergrößernden Teilraum 10 überführt bzw. verdrängt werden bzw. in umgekehrter Reihenfolge.

Die Viskosität des Dämpfungsfluids 7 während dessen Verdrängung von einen Teilraum in den anderen Teilraum über das Fluidleitsystem 11 bestimmt maßgeblich die Bremskraft dieser Kolbenbremse 1. Demgegenüber ist die Kompressibilität des jeweiligen Dämpfungsfluids vernachlässigbar. Als Dämpfungsfluid wird erfindungsgemäß eine Flüssigkeit eingesetzt. Die vorbeschriebene Kolbenbremse ist somit eine hydraulische Kolbenbremse.

Es versteht sich, dass eine Kolbenbremse in der bevorzugten Anwendung als Möbeldämpfer, insbesondere für den Aufbau des Gehäusetrennelements 8 einen wesentlich komplexeren Aufbau aufweisen kann. Ein weiteres bevorzugtes Ausführungsbeispiel, auf dessen Aufbau im Rahmen der vorliegenden Erfindung als bevorzugte konstruktive Variante vollumfänglich Bezug genommen wird, wird in der DE 20 2006 003 197 U1 beschrieben.

Es ist im Kontext einer erfindungsgemäß-eingesetzten Kolbenbremse von Vorteil, wenn die dynamische Viskosität des verwendeten Dämpfungsfluids 7 mehr als 100 mPas bei 20°C, vorzugsweise zwischen 220-3000 mPas bei 20°C, beträgt. Die dynamische Viskosität und das Scherverhalten kann in an sich bekannter Art und Weise durch ein Rotationsrheometer ermittelt werden.

Ein besonderer Aspekt der vorliegenden Erfindung liegt auf der Verwendung eines siliziumfreien Kohlenwasserstoffs.

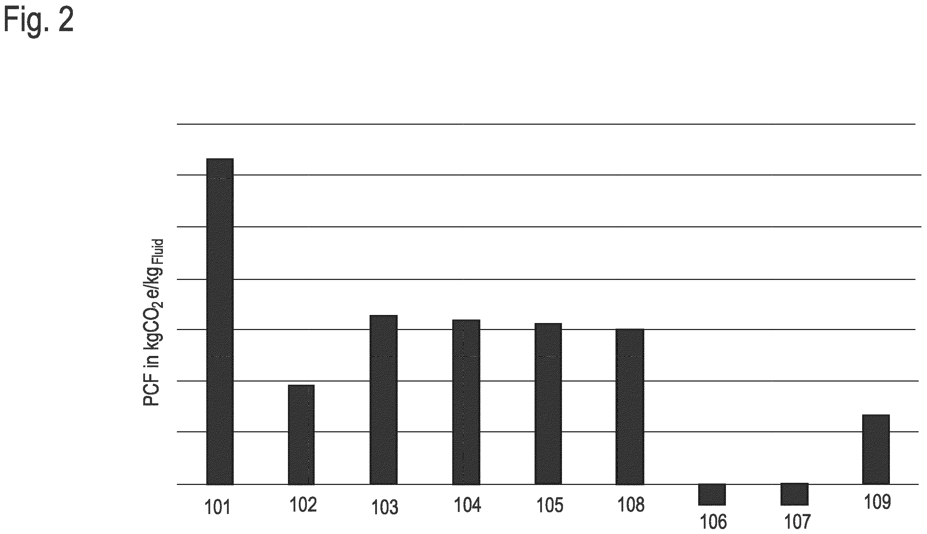

Fig. 2 zeigt verschiedene Kohlenwasserstoff-Verbindungen mit einer Angabe zum CO2-Fussabdruck nach der ISO 14040, nach der ISO 14044 und insbesondere nach der ISO14067, welcher mit den identischen Randbedingungen für alle angegebenen Kohlenwasserstoff-Verbindungen bestimmt wurde. Diese Angabe einer CO2-Bilanz ist ein Maß für den Gesamtbetrag von Kohlenstoffdioxid-Emissionen, die direkt und indirekt durch Aktivitäten verursacht wird oder während der Lebensstadien eines Produktes entstehen. Dies wird vorliegend auch "Cradle to Gate" genannt. Die Angabe erfolgt in kg CO₂-Äquivalente bezogen auf 1 kg der hergestellten Flüssigkeit bei einer Standardtemperatur, vorzugsweise 20°C, und bei Normaldruck.

Wie eine umfassende Ermittlung der PCF-Bilanz für die in Fig. 2 dargestellten Substanzen ergeben hat, weisen siliziumfreie Kohlenwasserstoffverbindungen eine wesentlich geringere PCF-Bilanz auf als siliziumhaltige Verbindungen, wie z.B. Silikonöl.

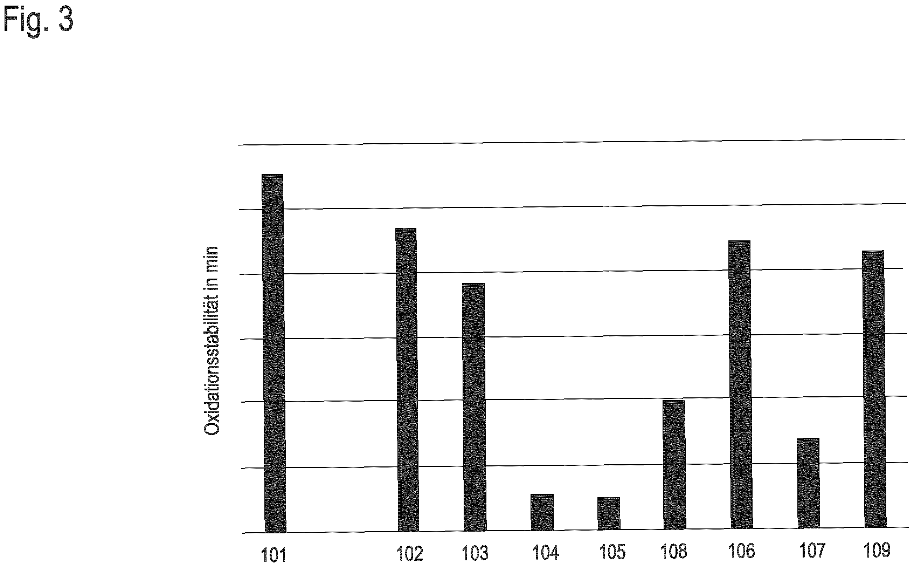

Fig. 3 zeigt eine Vergleichsmessung der Oxidationsbeständigkeit mehrerer Verbindungen unter analogen Messbedingungen. Die Oxidationsbeständigkeit des Dämpfungsfluids ist ein Maß für die Widerstandsfähigkeit gegen Reaktionen mit reinem Sauerstoff. Nach DIN 51 808 wird das Fluid zusammen mit dem Sauerstoff über eine bestimmte Zeit und Temperatur einem erhöhten Druck ausgesetzt. Prüfergebnis ist der Druckabfall des Sauerstoffs in Pa (Pascal) als Maß für den Grad der Oxidation. Die in Fig. 3 dargestellten Messwerte geben den Zeitpunkt bis zum besagten Druckabfall an. Ein geringerer Balken bedeutet eine geringere Oxidationsbeständigkeit.

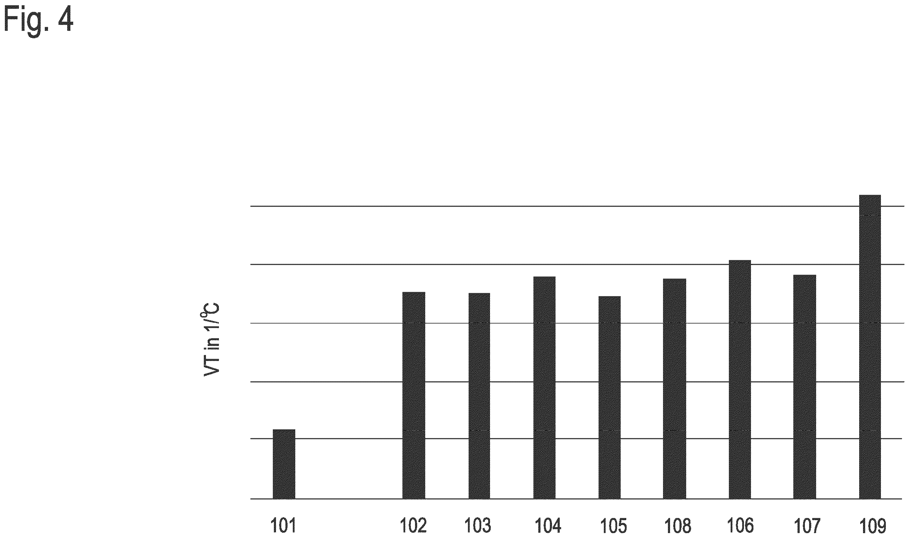

Fig. 4 zeigt ein Viskositäts-Temperatur-Verhalten (VT-Verhalten) als Messwerte für die verschiedenen vorgenannten Verbindungen unter identischen Messbedingungen.

Die Verbindung 101 beschreibt eine siliziumhaltige Silikonverbindung in Form eines Silikonöls. Diese Verbindung wird als Referenzmessung aufgeführt und zeigt die Unterschiede gegenüber den nachfolgend erfindungsgemäß-eingesetztem Dämpfungsfluiden. Die Verbindungen 101 weisen eine PCF-Bilanz von mehr als 6 kg Kohlendioxidäquivalente pro Kilogramm des verwendeten Produktes auf.

Die Verbindung 102 ist ein Polyalphaolefin (Kurz: PAO) als Beispiel einer siliziumfreien Kohlenwasserstoffverbindung. Derartige Polyolefine mit einer Doppelbindung in alpha-Position in der Alkylkette finden oftmals Anwendungen als synthetisches Motoröl. Der Kohlendioxid-Fußabdruck ist gegenüber einem Silikonöl, wie z.B. der Verbindung 101 um den Faktor 3 reduziert. Überdies weisen derartige PAO's eine erhöhte biologische Abbaubarkeit auf. PAO's weisen ebenfalls eine vergleichsweise hohe chemische Inertheit auf, z.B. eine erhöhte Oxidationsbeständigkeit auf, welche vergleichbar zur Oxidationsbeständigkeit von Silikonöl, wie z.B. der Verbindung 101, sind. Obwohl das V-T-Verhalten gegenüber Silikonöl deutlich verschlechtert ist, so überwiegen doch die vorgenannten Vorteile.

Die Verbindung 103 ist ein flüssiges Dämpfungsfluid in Form einer siliziumfreien Kohlenwasserstoff-Esterverbindung, vorzugsweise ein Fettsäureester als Veresterungsprodukt langkettiger Carbonsäuren. Der Kohlendioxid-Fußabdruck der Verbindung ist etwa um die Hälfte reduziert gegenüber der Verbindung 101. Die Oxidationsbeständigkeit der Verbindung ist vergleichsweise hoch in Vergleich zur Verbindung 101. Das V-T-Verhalten der Verbindung 103 ist vergleichbar zum V-T-Verhalten der Verbindung 102. Gleiches gilt für die biologische Abbaubarkeit. Allerdings kann durch Verwendung der Gruppe der Kohlenwasserstoff-Esterverbindungen, anders als bei der Verbindung 101 und 102, ein vergleichsweise hoher Anteil von typischerweise mehr als 50 Gew.% an erneuerbarem Kohlenwasserstoff zur Synthese der veresterten Moleküle, insbesondere der veresterten Fettsäuren, genutzt werden.

Die Verbindung 104 und 105 sind jeweils Pflanzenöle, vorzugsweise in Form von Triglycerid-Verbindungen. Dabei umfasst der Begriff des Pflanzenöls auch Nussöl aber alternativ oder zusätzlich auch Sonnenblumenöl, Rapsöl, Palmöl, Kokosfett, Olivenöl, Sojaöl oder Gemische daraus. Dabei ist der Anteil an erneuerbarem Kohlenstoff in der Verbindung deutlich über 90 Gew.%. Gleichzeitig weisen die Verbindungen eine biologische Abbaubarkeit von deutlich über 60% auf. Der PCF-Faktor der Verbindungen 104 und 105 liegt analog zur Verbindung 103 und damit deutlich unterhalb der Vergleichsverbindung 101. Die Oxidationsbeständigkeit der Verbindungen 104 und 105 ist deutlich herabgesetzt gegenüber der Vergleichsverbindung 101. Daher kann der Einsatz auf bestimmte Atmosphären und/oder auf Bereiche mit niedrigen Umgebungstemperaturen beschränkt sein. Alternativ kann der Einsatz von sogenannten Antioxidantien in erhöhter Konzentration den Einsatzbereich in den Verbindungen 104 und 105 erweitern. Zugleich kann das V-T-Verhalten im Vergleich zu den Verbindungen 102 und 103 vergleichbar - siehe Verbindung 104 - oder gleich - siehe Verbindung 105 - ausgebildet sein. Darüber hinaus ist allerdings im Fall von Pflanzenölen eine mangelnde Verfügbarkeit und/oder die Problematik eines Lieferkettenausfalls nicht gegeben. Die Verwendung von Pflanzenölen als Dämpfungsfluid überwiegt daher aus Umwelt- und Verfügbarkeitsgesichtspunkten, erfordert ggf. allerdings eine deutlich stärkere Anpassung an den Verwendungszweck durch Zusatz von Antioxidantien oder ggf. anderen Additiven.

Die Verbindungen 106 und 107 sind sogenannte medizinische Weißöle, in Form eines harz-lösemittel- und säurefreien biobasierten Paraffinöls. Derartige medizinische Weißöle, im Unterschied zu technischen bzw. mineralischen Weißölen, sind mit definierten Eigenschaften im Rahmen einer Fischer-Tropsch Synthese herstellbar. Weißöle sind Paraffinöle oder Gemische aus mehreren Paraffinölen. Entsprechendes Weißöl kann aus bestehenden Ressourcen z.B. durch Recycling neu gewonnen werden. Entsprechend vorteilhaft ist der Kohlendioxid-Fußabdruck für diese Materialien und der Anteil an erneuerbaren Kohlenstoffen im Molekül. Die biologische Abbaubarkeit liegt bei über 60%, wobei die Verbindungen allerdings gut recyclebar sind. Bei der Oxidationsbeständigkeit unterscheiden sich die beiden vorgenannten Verbindungen. Während die Verbindung 106 eine hervorragende Oxidationsbeständigkeit - vergleichbar mit der Verbindung 101 - aufweist, ist die Oxidationsbeständigkeit der Verbindung 107 herabgesetzt. Das V-T-Verhalten der Verbindungen 106 und 107 ist geringfügig schlechter als das V-T-Verhalten der Verbindungen 102 und 103.

Die Verbindung 108 ist ein Polyalkylglycol (kurz PAG), welches typischerweise als Hydraulikflüssigkeit oder auch als Schmierstoff eingesetzt wird. Ein Anteil an erneuerbaren Kohlenstoff ist bei Polyalkylglycol nicht gegeben. Allerdings liegt die biologische Abbaubarkeit bei mehr als 60%. Die ermittelte PCR-Bilanz entspricht der der Verbindungen 103, 104 oder 105. PAGs weisen eine etwa um 50-70% verringerte Oxidationsbeständigkeit auf wie das Silikonöl 101 und deckt dennoch ein breites Anwendungsspektrum im definierten Anwendungsbereich, z.B. als Möbeldämpfer, ab. Das VT-Verhalten der Verbindung 108 ist geringfügig schlechter als bei den Verbindungen 102 und 103.

Die Verbindung 109 ist sodann ein konventionelles Weißöl, auch weißes Mineralöl genannt. Dieses weist - anders als z.B. die Verbindungen 106 und 107 - keinen Anteil an erneuerbaren Kohlenstoffen auf, allerdings ist die PCR-Bilanz von Weißöl im Vergleich zu den Substanzen 101-105 deutlich verringert, so dass aus Umweltgesichtspunkten ein Einsatz von konventionellem Weißöl ebenfalls in Betracht kommt. Auch in Bezug auf eine chemische Stabilität bzw. Oxidationsbeständigkeit weist dieses Weißöl hervorragende Werte auf, die vergleichbar sind gegenüber Silikonöl. Negativ hingegen ist das V-T Verhältnis insbesondere auch im Vergleich zu allen anderen Dämpfungsfluiden, so dass bei dieser Verbindung eine erhöhte Beimischung von Viskositätsverbesserern in Abhängigkeit vom Einsatzgebiet notwendig ist.

Zu allen vorgenannten Verbindungen können überdies Antioxidantien wie vorzugsweise 3-[[bis(2-methylpropoxy)phosphinothioyl]thio]-2-methyl-propionsäure, 2,6-di-tert-butyl-p-cresol ggf. im Gemisch u.a. mit Dioctylphosphonat zugegeben werden.

Die vorgenannten Verbindungen 102-109 zeichnen sich durch eine Temperaturbeständigkeit zwischen -25 bis +70°C für die unbewegte Lagerung und durch eine Einsatztemperaturbeständigkeit zwischen 5 bis 40°C aus.

Alle vorgenannten Verbindungen weisen eine Lebensmittelkonformität gemäß dem Standard H1 aus, wonach diese Dämpfungsfluide, analog zu Schmierstoffen, für den zufälligen Kontakt mit Lebensmitteln zugelassen sind. Entsprechende Kolbenbremsen sind im Lebensmittelbereich, z.B. in Küchen, in zahllosen Anwendungen bedenkenlos einsetzbar

Darüber hinaus weisen die Verbindungen eine für den Einsatzbereich hinreichende Alterungsbeständigkeit und Oxidationsbeständigkeit auf und ein für den Einsatzbereich ebenfalls hinreichendes VT-Verhalten. Es hat sich überraschend gezeigt, dass trotz überragender Eigenschaften von Silikonölen in diesen Bereichen, die aufgeführten Verbindungen 102-109 zwar geringfügig bis erheblich schlechtere Werte aufweisen, welche jedoch für den vordefinierten Einsatzbereich zur Dämpfung entsprechender Auftreffgeschwindigkeiten akzeptabel sind.

Damit verbundene etwaige Nachteile, werden durch die deutlich verbesserten PCF-Bilanzen und die weiteren Umweltaspekte der aufgeführten Verbindungen ausgeglichen.

Aus diesen Gründen wird im Rahmen der vorliegenden Erfindung empfohlen eine oder mehrere dieser Verbindungen als Trägerfluid zur Bereitstellung eines Dämpfungsfluids für den Einsatz in Kolbenbremsen, insbesondere mit den vorgenannten technischen Kennzahlen bzw. für das vorbeschriebene Einsatzgebiet, einzusetzen.

Das besagte Trägerfluid ist dabei erfindungsgemäß mit mehr als 75 Gew.% des Dämpfungsfluids, vorzugsweise sogar mehr als 90Gew.% des Dämpfungsfluids, der Hauptbestandteil des Dämpfungsfluids.

Die restlichen Anteile können auf Additive wie Antioxidantien, Viskositätsindexverbesserer, ggf. Pigmente, Festschmierstoffe und/oder Stoffe zur Verbesserung der Wärmeleitfähigkeit für eine homogenere Wärmeverteilung in der zumeist höher-viskosen Flüssigkeit entfallen.

### Bezugszeichenliste

- 1: Kolbenbremse
- 2: Kolben
- 3: Anschlagsfläche
- 4: Gehäuse
- 5: Gehäuseraum
- 6: Durchtrittsöffnung
- 7: Dämpfungsfluid
- 8: Kolbenstange
- 9: Erster Teilraum
- 10: Zweiter Teilraum
- 11: Fluidleitsystem

## Patentansprüche

1. Kolbenbremse (1) umfassend einen beweglich-gelagerten Kolben (2) und ein Gehäuse (4), wobei in dem Gehäuse (3) ein Dämpfungsfluid (7) angeordnet ist und wobei die Bewegung des Kolbens (2) durch das Dämpfungsfluid (7) gebremst wird, wobei die Kolbenbremse (1) ausgelegt ist zum Abbremsen einer maximalen Kolbengeschwindigkeit zwischen 10-800 m/s um zumindest 80%, **dadurch gekennzeichnet, dass** das Dämpfungsfluid (7) zumindest zu 75 Gew.% eine Trägerflüssigkeit umfasst, welche als eine siliziumfreie Kohlenwasserstoffverbindung oder als ein Gemisch aus mehreren siliziumfreien Kohlenwasserstoffverbindungen ausgebildet ist.

2. Kolbenbremse nach Anspruch 1, **dadurch gekennzeichnet, dass** die Kolbenbremse (1), insbesondere das Gehäuse (3) und das darin angeordnete Dämpfungsfluid (7), ausgebildet sind für einen maximalen Arbeitsdruck von zumindest 125 bar, vorzugsweise bis 500 bar.

3. Kolbenbremse nach Anspruch 1 oder 2, **dadurch gekennzeichnet, dass** der Kolben (2) eine Wirkfläche von weniger als 2 cm² aufweist.

4. Kolbenbremse nach einem der vorhergehenden Ansprüche, **dadurch gekennzeichnet, dass** die siliziumfreie Kohlenwasserstoffverbindung oder alle im Gemisch enthaltenen siliziumfreien Kohlenwasserstoffverbindungen als ein Öl oder als ein Schmierstoff ausgebildet ist.

5. Kolbenbremse nach einem der vorhergehenden Ansprüche, **dadurch gekennzeichnet, dass** die siliziumfreie Kohlenwasserstoffverbindung oder alle im Gemisch enthaltenen siliziumfreien Kohlenwasserstoffverbindungen als ein Pflanzenöl ausgebildet ist.

6. Kolbenbremse nach einem der vorhergehenden Ansprüche, **dadurch gekennzeichnet, dass** die siliziumfreie Kohlenwasserstoffverbindung oder alle im Gemisch enthaltenen siliziumfreien Kohlenwasserstoffverbindungen als ein Weißöl, vorzugsweise als ein medizinisches Weißöl, besonders bevorzugt als Reaktionsprodukt einer Fischer-Tropsch-Synthese, ausgebildet ist.

7. Kolbenbremse nach einem der vorhergehenden Ansprüche, **dadurch gekennzeichnet, dass** die siliziumfreie Kohlenwasserstoffverbindung oder alle im Gemisch enthaltenen siliziumfreien Kohlenwasserstoffverbindungen als ein Polyolefin, vorzugsweise ein Polyalphaolefin, ausgebildet ist.

8. Kolbenbremse nach einem der vorhergehenden Ansprüche, **dadurch gekennzeichnet, dass** die siliziumfreie Kohlenwasserstoffverbindung oder alle im Gemisch enthaltenen siliziumfreien Kohlenwasserstoffverbindungen als ein Polyalkylglycol und/oder ein Polyethylenglycol ausgebildet ist.

9. Kolbenbremse nach einem der vorhergehenden Ansprüche, **dadurch gekennzeichnet, dass** die siliziumfreie Kohlenwasserstoffverbindung oder alle im Gemisch enthaltenen siliziumfreien Kohlenwasserstoffverbindungen als eine Fettsäure ausgebildet ist.

10. Kolbenbremse nach einem der vorhergehenden Ansprüche, **dadurch gekennzeichnet, dass** die siliziumfreie Kohlenwasserstoffverbindung oder alle im Gemisch enthaltenen siliziumfreien Kohlenwasserstoffverbindungen als ein Fettsäureester, vorzugsweise als ein Triglycerid, ausgebildet ist.

11. Kolbenbremse nach einem der vorhergehenden Ansprüche, **dadurch gekennzeichnet, dass** die dynamische Viskosität des Dämpfungsfluids, und besonders bevorzugt der Trägerflüssigkeit, mehr als 200 mPas bei 25°C, vorzugsweise zwischen 220-2500 mPas bei 25°C und besonders bevorzugt zwischen 300 - 2400 mPas bei 25°C beträgt.

12. Kolbenbremse nach einem der vorhergehenden Ansprüche, **dadurch gekennzeichnet, dass** das Dämpfungsfluid eine geringere PCF-Bilanz als ein Silikonöl aufweist und besonders bevorzugt eine um zumindest 30% geringere PCF-Bilanz als ein Silikonöl aufweist.

13. Kolbenbremse nach einem der vorhergehenden Ansprüche, **dadurch gekennzeichnet, dass** das Dämpfungsfluid (7), insbesondere in Form eines Pflanzenöls, zumindest 5%, vorzugsweise zumindest 10% der Oxidationsbeständigkeit eines Silikonöls aufweist.

14. Kolbenbremse nach einem der vorhergehenden Ansprüche, **dadurch gekennzeichnet, dass** das Dämpfungsfluid (7) ausgebildet ist als ein H1- - FDA-konformes Medium oder nach ISO 21469 zertifiziertes Medium.

15. Kolbenbremse nach einem der vorhergehenden Ansprüche, **dadurch gekennzeichnet, dass** das Dämpfungsfluid (7) zu einem Gesamtumfang von weniger als 25 Gew.%, vorzugsweise weniger als 10 Gew.%, an Additiven aufweist.

16. Kolbenbremse nach Anspruch 15, **dadurch gekennzeichnet, dass** die Additive zumindest einen oder mehreren der folgenden Verbindungen aufweist: Antioxidans, Viskositätsindex-Verbesserer, Pigment, Festschmierstoff, Schaumverbesserer, Säurefänger und/oder eine Verbindung zur Verbesserung der Wärmeleitfähigkeit.

17. Kolbenbremse nach einem der vorhergehenden Ansprüche, **dadurch gekennzeichnet, dass** das Gehäuse (4) einen ersten und einen zweiten Teilraum (9, 10) aufweist, welche durch den beweglichen Kolben (2) voneinander abgetrennt sind, welcher mit einer Kolbenstange (8) verbunden ist, wobei zumindest einer der Teilräume (9, 10) mit dem Dämpfungsfluid (7) befüllt ist und wobei die beiden Teilräume (9, 10) mit einem Fluidleitsystem (11) zum Überleiten des Dämpfungsfluids (7) vom ersten in den zweiten Teilraum (9, 10) miteinander verbunden sind.

18. Verwendung einer Kolbenbremse (1) nach einem der vorhergehenden Ansprüche als Möbelanschlagsdämpfer und/oder als ein Anschlagsdämpfer für die weiße Ware, insbesondere für Türen und/oder Schubkästen.
